# EUROPEAN PATENT SPECIFICATION

(11) **EP 4 044 504 B1**
(45) Date of publication and mention of the grant of the patent: **04.12.2024**
(21) Application number: 22156078.2
(22) Date of filing: 10.02.2022
(51) Int. Cl.: H04L 9/40

(54) **USER DATA PRIVACY**
BENUTZERDATENSCHUTZ
CONFIDENTIALITÉ DE DONNÉES D'UTILISATEUR

(30) Priority: 12.02.2021 FI 20215141
(43) Date of publication of application: 17.08.2022
(73) Proprietor: Nokia Technologies Oy, 02610 Espoo (FI)
(72) Inventor: KHARE, Saurabh, 560005 Bangalore (IN); AGGARWAL, Chaitanya, 80637 Munich (DE); JERICHOW, Anja, 85567 Grafing bei München (DE)
(74) Representative: Script Intellectual Property LLP

(56) References cited:
- US-A1- 2014 099 920
- US-A1- 2017 308 715

## Description

### FIELD

The present disclosure relates to protection of user data in the context of a communication network, such as, for example, a cellular communication network.

### BACKGROUND

In a digital domain, protection and dependable management of user data has emerged as an increasingly important goal. While business interest may be to maximize collection of user data, privacy enhancing technologies, PET, aim to minimize the collection of personal data. One method for implementing privacy is requesting user consent. Other privacy enhancing technologies include pseudonymization and anonymization techniques, encryption of content transferred to avoid linking interest data with individuals, and limiting the data collected to reduce opportunities to determine correlations between user identity and other personal information.

In a cellular communication environment, roaming situations present additional challenges in implementing a uniform protection to user data.

Document US2017/308715 A1 discloses control of data usage using structured data governance metadata, wherein an action is allowed or disallowed for data based on data governance metadata and rules for the action. Document US2014/099920 A1 discloses managing opt-in and opt-out for private data access, wherein a mobile device may determine whether a program requesting user data is permitted to access the user data, based on a rule.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising means for performing: processing a request for data of at least one user of a communication system, the request comprising an indication of an intended use of the data, the request received directly or indirectly from a network function consumer in a service based architecture communication network, obtaining at least one user privacy rule relating to the at least one user, and determining how to respond to the request based at least in part on the intended use of the data and the at least one user privacy rule relating to the at least one user, wherein the obtaining comprises obtaining the at least one user privacy rule in a heartbeat response message from a network repository function.

According to a second aspect of the present disclosure, there is provided an apparatus comprising means for performing: functioning as a network repository function in a service based architecture communication network, receiving a heartbeat message from a network function producer, and responding to the heartbeat message with a heartbeat response to the network function producer, the heartbeat response comprising at least one user privacy rule relating to at least one user.

According to a third aspect of the present disclosure, there is provided a method, comprising processing, by an apparatus, a request for data of at least one user of a communication system, the request comprising an indication of an intended use of the data, the request received directly or indirectly from a network function consumer in a service based architecture communication network, obtaining at least one user privacy rule relating to the at least one user, and determining how to respond to the request based at least in part on the intended use of the data and the at least one user privacy rule relating to the at least one user, wherein the obtaining comprises obtaining the at least one user privacy rule in a heartbeat response message from a network repository function.

According to a fourth aspect of the present disclosure, there is provided a method, comprising functioning, by an apparatus, as a network repository function in a service based architecture communication network, receiving a heartbeat message from a network function producer, and responding to the heartbeat message with a heartbeat response to the network function producer, the heartbeat response comprising at least one user privacy rule relating to at least one user.

(deleted).

(deleted).

(deleted).

(deleted).

According to a ninth aspect of the present disclosure, there is provided a computer program configured to cause an apparatus to perform at least the following, when run on a computer: process a request for data of at least one user of a communication system, the request comprising an indication of an intended use of the data, the request received directly or indirectly from a network function consumer in a service based architecture communication network, obtain at least one user privacy rule relating to the at least one user, and determine how to respond to the request based at least in part on the intended use of the data and the at least one user privacy rule relating to the at least one user, wherein the obtaining comprises obtaining the at least one user privacy rule in a heartbeat response message from a network repository function.

According to a tenth aspect of the present disclosure, there is provided a computer program configured to cause an apparatus to perform at least the following, when run on a computer: function as a network repository function in a service based architecture communication network, receive a heartbeat message from a network function producer, and respond to the heartbeat message with a heartbeat response to the network function producer, the heartbeat response comprising at least one user privacy rule relating to at least one user.

(deleted).

(deleted).

(deleted).

(deleted).

### BRIEF DESCRIPTION OF THE DRAWINGS

FIGURE 1 illustrates an example system in accordance with at least some embodiments;
FIGURE 2 illustrates examples of privacy rules of specific users in accordance with at least some embodiments;
FIGURE 3 illustrates an example apparatus capable of supporting at least some embodiments;
FIGURE 4A illustrates signalling in accordance with at least some embodiments;
FIGURE 4B illustrates signalling in accordance with at least some embodiments, and
FIGURE 5 is a flow graph of a method in accordance with at least some embodiments.

### EMBODIMENTS

To enhance control over user data, which may be of sensitive or private nature, a privacy rule enforcement mechanism is herein disclosed. The privacy rule enforcement mechanism enables setting network-wide privacy rules in a standardized manner, enabling a control mechanism applied to network functions of the network to handle user data of a same type using a same privacy rule. The standardized setting of network-wide privacy rules may also enable interworking of the policies in other networks as the other networks may be capable of applying the standardized privacy rules.

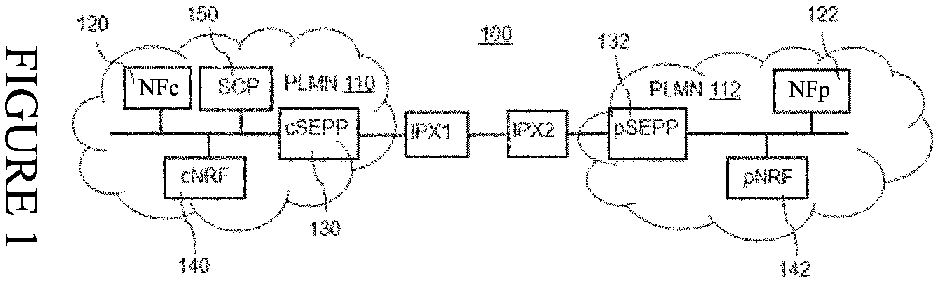

FIGURE 1 illustrates an example system 100 in accordance with at least some embodiments. The system comprises two public land mobile networks, PLMNs, 110, 112, each equipped with a network function, NF, 120, 122. A network function may refer to an operational and/or a physical entity. A network function may be a specific network node or element, or a specific function or set of functions carried out by one or more entities, such as virtualized network elements, VNFs. One physical node may be configured to perform plural NFs. Examples of such network functions include a resource control or management function, session management or control function, interworking, data management or storage function, authentication function or a combination of two or more of these functions.

In case of a third generation partnership project, 3GPP, fifth generation, 5G, system service based architecture, SBA, core network, NFs may comprise at least some of an access and mobility management function, AMF, a session management function, SMF, a network slice selection function, NSSF, a network exposure function, NEF, a network repository function, NRF, a unified data management, UDM, a unified data repository, UDR, an authentication server function, AUSF, a policy control function, PCF, and an application function, AF. A NEF is configured to provide access to exposed network services and capabilities. A UDM is configured to manage network user data in a single, centralized element. A UDR facilitates the share and the provisioning of user-related data throughout services of a 3GPP system. The PLMNs each may further comprise a security edge protection proxy, SEPP, 130, 132 configured to operate as a security edge node or gateway. The NFs may communicate with each other using representational state transfer, REST, application programming interfaces, for example. These may be known as RESTful APIs. Further examples of NFs include NFs related to gaming, streaming or industrial process control. The system may comprise also nodes from 3G or 4G node systems, such as home subscriber server, HSS, and a suitable interworking function for protocol translations between e.g. Diameter and JSON-based RESTful APIs. While described herein primarily using terminology of 5G systems, the principles of the invention are applicable also to other communication networks, such as 4G networks and non-3GPP networks, for example.

While the example of FIGURE 1 has two PLMNs 110, 112, in general at least some embodiments of the invention may be practiced in a single PLMN, which need not necessarily have SEPPs. Likewise, more than two PLMNs may be present. In a multi-PLMN case, in FIGURE 1, the SEPP 130, 132 is a network node at the boundary of an operator's network that may be configured to receive a message, such as an HTTP request or HTTP response from an NF, to apply protection for sending and to forward the thus reformatted message through a chain of intermediate nodes, such as IP exchanges, IPX, towards a receiving SEPP. The receiving SEPP receives a message sent by the sending SEPP and forwards the message towards an NF within its operator's network, e.g. the AUSF.

In the example of FIGURE 1, communication between a service-consuming NF and a service-producing NF, henceforth referred to as NFc 120 and NFp 122. They may also be referred to as NF service consumer and NF service producer, respectively. As noted, the NFc and NFp may reside in the same PLMN or in different PLMNs. The NFp offers a service the NFc is interested in obtaining, for example, the NFc may be interested in obtaining chunks of data of one user, or plural users, of the PLMN.

A service communication proxy, SCP, 150 may be deployed for indirect communication between network functions, NFs. An SCP is an intermediate network entity to assist in indirect communication between an NFc and an NFp, including routing messages, such as, for example, control plane messages between the NFs, and optionally including discovering and selecting NFp 122 on behalf of NFc 120 or requesting an access token from the NRF 140, 142 or an Authorization Server on behalf of NFc 120 to access the service of NFp 122.

Direct communication may be applied between NFc 120 and NFp 122 for an NF service, or NF service communication may be performed indirectly via SCP(s) 150. In direct communication, the NFc 120 performs discovery of the target NFp 122 by local configuration or via local NRF, such as cNRF 140. In indirect communication, the NFc 120 may delegate the discovery of the target NFp 122 to the SCP 150. In the latter case, the SCP may use parameters provided by NFc 120 to perform discovery and/or selection of the target NFp 122, for example with reference to one or more NRF.

NF discovery and NF service discovery enable entities, such as NFc or SCP, to discover a set of NF instance(s) and NF service instance(s) for a specific NF service or an NFp type. The NFc and/or the SCP may be core network entities. The network repository function, NRF, may comprise a function that is used to support the functionality of NF and NF service registration, discovery, authorization and, optionally, also status notification. Additionally or alternatively, the NRF may be configured to act as an authorization server. The NRF may maintain an NF profile of available NFp entities and their supported services. The NRF may notify about newly registered, updated, or deregistered NFp entities along with its NF services to a subscribed NFc or SCP. An NRF may thus advise NFc or SCP entities concerning where, that is, from which NFp entities, they may obtain services they need. An NRF may be co-located together with an SCP, for example, run in a same computing substrate. Alternatively, NRF may be in a physically distinct node than an SCP or even hosted by a service provider.

In order for the NFc 120 or SCP 150 to obtain information about NFp 122 and/or NF service(s) registered or configured in a PLMN/slice, NFc 120 or SCP 150 may initiate, based on local configuration, a discovery procedure with an NRF, such as cNRF 140. The discovery procedure may be initiated by providing the type of the NFp and optionally a list of the specific service(s) it is attempting to discover. The NFc 120 or SCP 150 may additionally or alternatively provide other service parameters, such as information relating to network slicing.

It is to be noted that at least some of the entities or nodes 120, 122, 140, 142 may act in both service-consuming and service-providing roles and that their physical structure may be similar or identical, while their role in the present examples in delivery of a particular message or service is identified by use of the prefix/suffix "c" or "p" indicating whether they are acting as the service-consuming or service-producing NF, respectively. It is to be noted that instead of "c" and "p", "v" for visited and "h" for home can be used to refer to at least some respective entities in the visited and home PLMNs. In some embodiments, a system implementing an embodiment of the present disclosure comprises both fourth generation, 4G, and fifth generation, 5G, parts.

In general, a network support function such as an NRF may further be configured to act as an authorization server, and provide the NFc, or an SCP acting on behalf of the NFc, with a cryptographic access token authorizing the NFc to use the service provided by the NFp. In general, an NRF is a terminological example of a network support node. In general, an SCP is a terminological example of a proxy entity. The NFc or SCP may include the access token in a request message when requesting the service from the NFp, for example in an "authorization bearer" header. Such an access token may be referred to herein briefly as a token. For example, the NRF may act as an OAuth 2.0 authentication server. The token may comprise identifiers of the NFc, NRF and/or NFp, a timestamp and/or an identifier of the specific service which is authorised for the NFc with the token, for example. The token may comprise a token identifier of itself, for example a serial number. The token may be cryptographically signed using a private key of the NRF. A validity of such a cryptographic signature may be verified using the corresponding public key of the NRF, which the NFp may obtain in connection with registering with the NRF the service(s) it offers, for example. When the NFc contacts the NFp, it may present the access token, which the NFp may then verify, for example at least in part by using its copy of the public key of the NRF. In at least some embodiments, NFp nodes are configured to send heartbeat messages, which may alternatively be called heartbeat messages, to at least one NRF. Thus the NRF may know that the NFp is still available to provide service, and has not been deactivated. For example, the heartbeat message may be sent every five or ten seconds. The NRF may respond to the heartbeat to acknowledge the heartbeat and correspondingly inform the NFp it remains active.

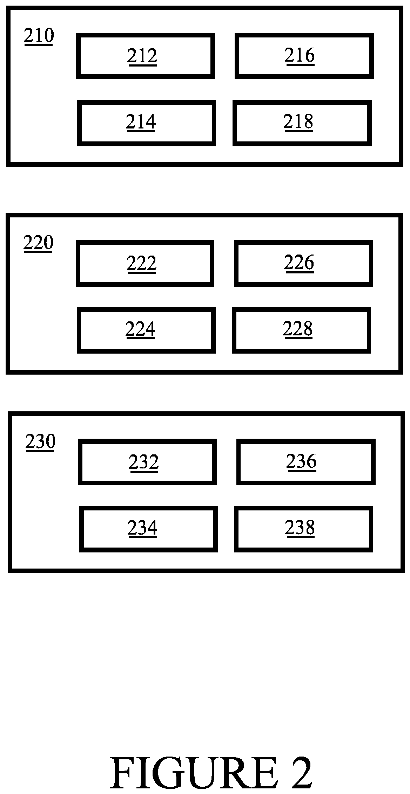

FIGURE 2 illustrates examples of privacy rules of specific users in accordance with at least some embodiments. Privacy rule 210 comprises a user indication 212 comprising an identity of a user or user group the data of which privacy rule 210 is to be applied to. The user indication 212 may take the value of a default indication indicating that privacy rule 210 is to be applied to all users. In some embodiments where user indication 212 is absent, such privacy rules are to be applied to all users. In some embodiments, both user-specific and group specific, and/or network specific privacy rules are present.

Privacy rule 210 comprises user data category 214, defining the type of user data to which privacy rule 210 is to be applied. For example, user data category 214 may comprise an indication that identity of the user is the type of user data to which privacy rule 210 applies.

Privacy rule 210 comprises privacy requirement 216 defining a privacy preserving action, or filter, which is to be applied to user data of the type identified in user data category 214. For example, where user data category 214 is identity, privacy requirement 216 may define that the actual user identity is to be removed and replaced with a randomly or pseudo-randomly generated spoof identity, to protect the actual user identity.

Privacy rule 210 may further comprise an intended use indication 218, defining a purpose of user data use for which privacy rule 210 applies. For example, the intended use indication 218 may define that privacy rule 210 is to be applied when the intended use is advertising. In that case, privacy rule 210 is not applied when the user data, even of the type identified in user data category 214, is sought for a different purpose from the one defined in intended use indication 218. For example, where the intended use indication 218 relates to advertising, the user data may be used for the purpose of network coverage optimization despite privacy rule 210.

FIGURE 2 further illustrates privacy rule 220. Privacy rule 220 comprises user indication 222 comprising an identity of a user the data of whom privacy rule 220 is to be applied to. For example, an IMSI may be used as this indication. Privacy rule 220 further comprises user data category 224 defining user identity as the type of user data to which privacy rule 220 is to be applied. Privacy rule 220 comprises privacy requirement 226 defining that the user identity is to be removed and replaced with an identity of an identity pool when privacy rule 220 is applied. An identity pool may correspond to a list of user identities, with the significance that where a user identity identifies the pool, it is known that the user data belongs to one of the users in the pool, but it is not known specifically which user in the pool is the owner of the user data. Privacy rule 220 comprises intended use indication 228, which may comprise advertising or public safety, for example.

Finally, FIGURE 2 illustrates privacy rule 230. Privacy rule 230 comprises user indication 232 comprising an indication of users the data of whom privacy rule 230 is to be applied to. For example, a subscriber class may be used as this indication. Privacy rule 230 further comprises user data category 234 defining user location as the type of user data to which privacy rule 230 is to be applied. Privacy rule 230 further comprises privacy requirement 236 defining that the user location is to be removed and replaced with a less precise indication of location when privacy rule 220 is applied. For example, a geo-coordinate location of the user may be replaced with a name of a city or an identity of a geofence where the user is, or was, located. Alternatively, the actual user location might be required to be changed to a randomly chosen location, or changed by a random amount/distance. Privacy rule 230 comprises intended use indication 238, which may comprise user profiling, for example.

Privacy rules may be used to block access to specific types of user data for specific uses, or for all uses. For example, the user data category may be set to call log content, and the privacy rule may be set to block access to the call log. If no separate intended use is specified, then access to the call log, or whatever data type is defined in the privacy rule, is blocked for all intended uses. Examples of user indications include the IMSI, and email address, a social security number or a phone number to identity a specific user. A pool identity, a subscriber class or a gender may be used to identify a group of users in the user indication.

In general, a privacy rule may comprise the user data category and the privacy requirement. A privacy rule may further include one of the following three options: firstly, the user indication, secondly, the user indication and the intended use indication and thirdly, only the intended use indication. In some embodiments, the user data category comprises an indication which is comprised in a hierarchic relationship with other user data category indications. In these cases, a broad indication of user data category may indicate the privacy rule is to be applied to all user data types hierarchically comprised, in the hierarchic relationship, under the indication included in the privacy rule, unless a separate privacy rule includes a more specific user data category indication requesting different treatment for the more specific user data type, only. In the latter case, the broader rule is applied to user data types covered by the broad user data category but not included in the more specific user data category, and the more specific rule is applied to user data types covered by the more specific indication. The hierarchic relationship of user data may be a hierarchy of data in a subscriber data store, for example.

An example of the hierarchic data case is where a broader user data category is user identity, and the privacy requirement is to replace the user identity with a pool identity. Separately, in this example, another privacy rule defines social security number as the user data category, and the related privacy requirement is to replace the social security number with a random number. In this example, all user identities except social security numbers are replaced with applicable pool identities, and social security numbers are replaced with random numbers, completely obscuring the social security numbers.

In addition to the data category indications, also, or alternatively, the intended use indications may be arranged in a defined hierarchical arrangement. In this case, for example, "Advertising" hierarchically comprises also the narrower intended uses of "political advertising" and "consumer product advertising", for example. As another example, "Network optimization" may comprise the narrower intended uses "Network coverage optimization" and "Network latency optimization". When this is the case, a privacy rule applies to all intended uses covered by the intended use indication provided in the privacy rule, thus for example a ban on "Advertising" would ban both political and consumer-product advertising in addition to advertising not classified in a specific sub-category. As was the case in data categories, also in the intended use indications privacy rules may be defined for a hierarchically higher level, broad, intended use and exceptions to the higher-level rule may be defined with separate privacy rules with more specific, hierarchically lower-level intended uses.

In general, a network function producer, NFp, may receive a request for service, which includes a request for user data of at least one user of the communication system, wherein the request comprises an indication of an intended use of the requested user data. The request may be received from a network function consumer, either directly or indirectly, such as via an SCP. The network function provided may be configured to responsively obtain at least one privacy rule relating to the at least one user. For example, the request may identify a specific user, and the NFp may be configured to responsively obtain a privacy rule of the specific user. Alternatively, the request may identify a group identity which cover plural specific users. Yet further, the request may request data of all users within a geographic area which is defined in the request, for example.

The NFp may obtain the at least one privacy rule from a NRF, for example, by including in a heartbeat message it sends to the NRF information specifying the user, or users, the data of whom is requested in the request. Thus the heartbeat may comprise a specific user identity, plural specific user identities, a group identity or a geographic area definition as user identity, for example. In response, the NRF may include one or more privacy rules relating to the one or more users in a heartbeat response it sends the NFp. Alternatively, the NFp does not include in the heartbeat information on the user, or users, the data of whom is requested from the NFp and the NRF pushes in an unsolicited manner privacy rules relating to plural users to NFps in heartbeat responses it sends to NFp nodes. Alternatively, the NFp may obtain the privacy rule(s) by requesting them from a node, such as a UDM or a UDR, for example.

Once in possession of the privacy rule(s), the NFp applies them to any user data it provides responsive to the request. Thus the privacy rules are enforced network-wide. The NFp may decline to provide any user information responsive to the request in case the privacy rule(s) do not allow provision of the information. Therefore, determining how to respond to the request, based on the intended use and the privacy rule(s) may first comprise deciding whether to respond at all, and then to what extent in case a response is appropriate. The NFp may be an AMF or a network data analytics function, NWDAF or Network exposure function, NEFfor example.

Privacy rules in NRF or UDM/UDR may be updated by the operator of the PLMN or the user himself. The user may have a privacy option management application, for example in a smartphone, which enables management and configuration of privacy rules applying to the user himself, and/or his children, for example. These updates to the set of privacy rules may be delivered to the network via text message or by an interactive voice response, IVR, system, for example.

In some embodiments, the NFp implementing the privacy rules is the SEPP, SCP or NEF acting as gateway NF. In these embodiments, the privacy rules are used to control user data which is submitted responsive to requests originating outside the PLMN itself.

In a 3GPP system application programming interfaces, APIs may be enhanced to enable communication of the intended use indication 218, 228, 238, for example the following APIs may be so enhanced : Namf_EventExposure_Subscribe, Nsmf_EventExposure_Subscribe, Naf_EventExposure_Subscribe, Nnwdaf_AnalyticsInfo_Requst and Nnwdaf_AnalyticsSubscription_Subscribe.

In some embodiments, interworking between plural PLMNs is enabled in that a privacy rule of a roaming user equipment, UE, may be retrieved from its home PLMN. The NFp may determine the home PLMN using the IMSI of the UE or the PLMN identifier received in the incoming request, for example. A further example of inter-PLMN interworking is where PLMNs are configured to apply the same general privacy rules, that is, privacy rules which are not limited to any specific user or user group but which apply to all users using the PLMN, or with the PLMN as home PLMN. In this latter case, the general privacy rules may be copied to UDM/UDRs and/or NRFs of the participating PLMNs to obtain uniform application of general privacy rules. In some example, some of the privacy rules can be configured in the UDM/UDR and some of them are configured in the NRF.

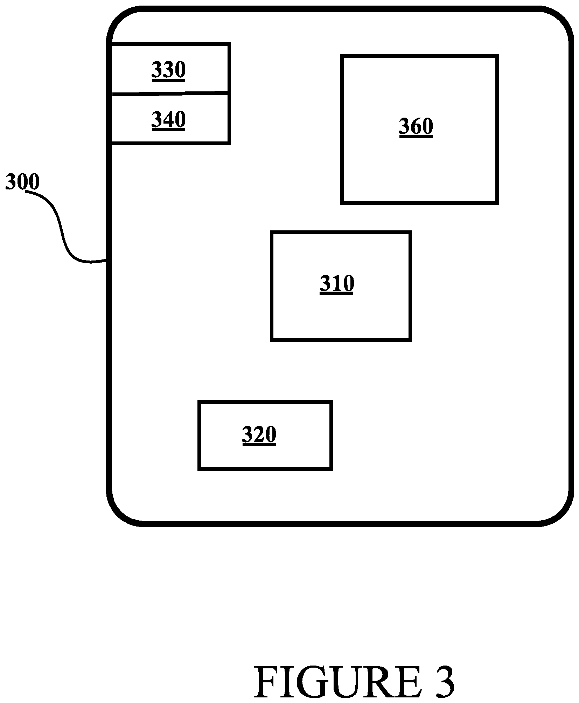

FIGURE 3 illustrates an example apparatus capable of supporting at least some embodiments. Illustrated is device 300, which may comprise, for example, an NFp or NRF. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Zen processing core designed by Advanced Micro Devices Corporation. Processor 310 may comprise at least one AMD Threadripper and/or Intel Core processor, for example. Processor 310 may comprise at least one application-specific integrated circuit, ASIC. Processor 310 may comprise at least one field-programmable gate array, FPGA. Processor 310 may be means for performing method steps in device 300, such as processing, obtaining, determining, functioning, receiving and responding, for example. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver.

Device 300 may comprise user interface, UI, 360. UI 360 may comprise at least one of a display, a keyboard, a touchscreen, a vibrator arranged to signal to a user by causing device 300 to vibrate, a speaker or a microphone. A user may be able to operate device 300 via UI 360, for example to configure user data management parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

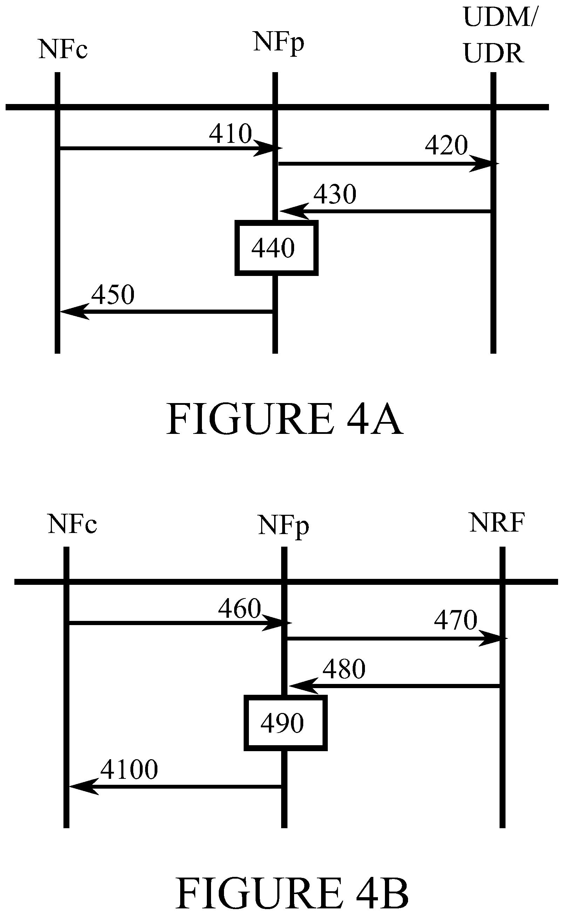

FIGURE 4A illustrates signalling in accordance with at least some embodiments. On the vertical axes are disposed, on the left, NFc, in the centre, the NFp, AMF or NWDAF or NEF (hereinafter: NFp), and on the right, a UDM (or UDR). Time advances from the top toward the bottom.

In phase 410, The NW service consumer NFc requests location data of a specific user from the NFp. The NFc needs this data for advertisement use, wherefore NFc adds the indication of intended use as "Advertisement" in a service request sent to the NFp in phase 410.

In phase 420, the NFp requests any privacy rules relating to the specific user from the UDM (or UDR). The request of phase 420 in this example comprises an identifier of the specific user. In some embodiments, the request of phase 420 includes an indication that the NFp supports application of privacy rules. Responsively, in phase 430, the UDM/UDR provides the requested privacy rule, or rules in case there are several relating, that is, applying, to the specific user. In some embodiments, the request of phase 420 further specifies the user data category and/or the intended use, so that the UDM/UDR need not provide unnecessary privacy rules in phase 430. The UDM/UDR may also provide any privacy rules relating to user data categories hierarchically below the one(s) indicated in the request of phase 420. Optionally, NFp may also perform a Subscribe/Notify subscription to privacy rule(s) of this specific user, so that the NFp will always have a latest copy of the user privacy rule(s), for example in cases where user privacy data is updated over period of time.

In phase 440, the NFp determines how to handle the request, based on the privacy rule(s) received in phase 430 and the intended use received in phase 410. For example, if the privacy rule(s) don't allow any user data to be provided for advertisement purposes, the NFp may decline or discard the request of phase 410. Alternatively, in case the intended use is a purpose which the privacy rule(s) do not forbid, the NFp may provide the requested data, which may be at least in part anonymized in accordance with the privacy rule(s) for the user data category(ies) requested, as described herein above in connection with FIGURE 2.

Phase 450 corresponds to a response provided to the NFc, or alternatively to another node, with the requested user data which has been processed in accordance with the privacy rule(s).

FIGURE 4B illustrates signalling in accordance with at least some embodiments of the present invention. On the vertical axes are disposed, on the left, NFc, in the centre, the NFp and on the right, an NRF. Time advances from the top toward the bottom.

In phase 460, the NFc issues a service request, which comprises an explicit or implicit request for the user data of at least one user. The request of phase 460 includes the indication of intended use of the user data, as described herein above.

In phase 470, NFp sends a heartbeat message to the NRF, to inform the NRF that the NFp is still online and prepared to provide its service(s) to NFcs.. Phase 480 comprises the NRF responding to the heartbeat message, and including in this response at least one privacy rule limiting the handling of data of at least one of the at least one user whose data was requested in phase 460. The message of phase 480 may comprise a PATCH response, for example. In some example, privacy rules in the 480 are generic rules, not specific to individual UEs. Phase 480 may precede the request of phase 460, such that NFp nodes store privacy rules they receive in heartbeat responses, wherein such privacy rules may control the handling of data of groups of users, for example, such that the NFp may already be in possession of a privacy rule, or several privacy rules, pertaining to data requested in phase 460.

In phase 490, the NFp determines how to handle the request, based on the privacy rule(s) and the intended use. For example, if the privacy rule(s) don't allow any user data to be provided for the purpose indicated in request 460, the NFp may decline or discard the request of phase 460. Alternatively, in case the intended use is a purpose which the privacy rule(s) do not forbid, the NFp may provide the requested data, which may be anonymized in accordance with the privacy rule(s) for the user data category(ies) requested.

Phase 4100 corresponds to a response provided to the NFc, or alternatively to another node, with the requested user data which has been processed in accordance with the privacy rule(s).

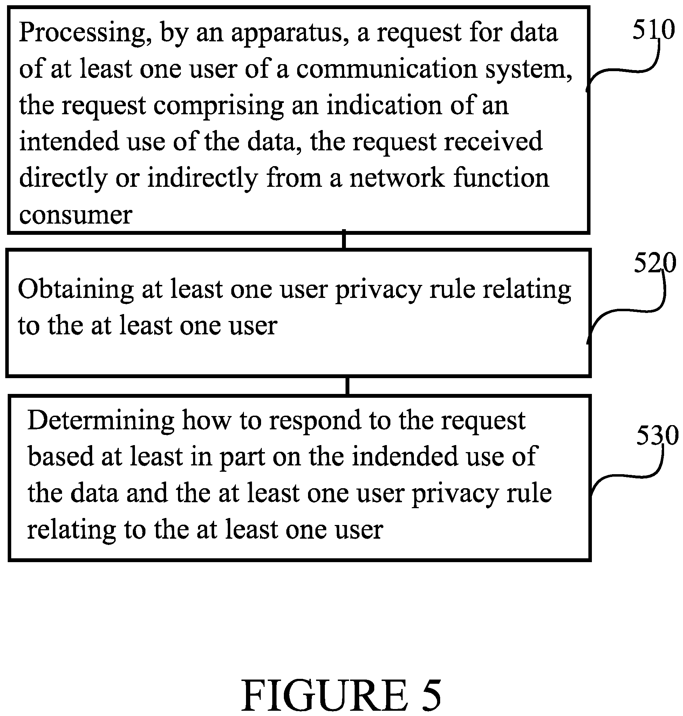

FIGURE 5 is a flow graph of a method in accordance with at least some embodiments. The phases of the illustrated method may be performed in an apparatus such as an NFp, for example, or in a control device configured to control the functioning thereof, when installed therein.

Phase 510 comprises processing, by an apparatus, a request for data of at least one user of a communication system, the request comprising an indication of an intended use of the data, the request received directly or indirectly from a network function consumer. Phase 520 comprises obtaining at least one user privacy rule relating to the at least one user. Finally, phase 530 comprises determining how to respond to the request based at least in part on the intended use of the data and the at least one user privacy rule relating to the at least one user. A user privacy rule may relate to a user when the user privacy rule restricts how data of the user is handled. In some embodiments, phase 530 comprises determining how to respond to the request based at least in part on the intended use of the data and/or the at least one user privacy rule relating to the at least one user.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

The expression "at least one of A or B" in this document means A, or B, or both A and B.

### INDUSTRIAL APPLICABILITY

At least some embodiments of the present invention find industrial application in protection of personal data.

### ACRONYMS LIST

- API: application programming interface
- FQDN: fully qualified domain name
- IMSI: international mobile subscriber identity
- NEF: Network Exposure Function
- NFc: network function consumer
- NFp: network function producer
- NWDAF: network data analytics function
- NRF: network repository function
- PET: privacy enhancing technologies
- SCP: service communication proxy
- SEPP: Security Edge Protection Proxy
- UDM: unified data management
- UDR: unified data repository

## Claims

1. An apparatus (300) acting as a network function producer comprising means for performing
- processing (510) a request for data of at least one user of a communication system, the request received directly or indirectly from a network function consumer in a service based architecture communication network;
- obtaining (520) at least one user privacy rule relating to the at least one user; and
- determining (530) how to respond to the request based at least in part on an intended use of the data and the at least one user privacy rule relating to the at least one user;
**characterized in that**
- the obtaining (520) comprises obtaining the at least one user privacy rule in a heartbeat response message from a network repository function and **in that** the request comprises an indication of an intended use of the data.

2. The apparatus (300) according to claim 1, wherein each one of the at least one user privacy rule comprises a user data category and a privacy requirement for the user data category.

3. The apparatus (300) according to claim 2, wherein the at least one user privacy rule comprises a rule comprising an identity as the user data category and wherein the privacy requirement is a requirement to change the identity to a random identity.

4. The apparatus (300) according to claim 2, wherein the at least one user privacy rule comprises a rule comprising an identity as the user data category and wherein the privacy requirement is a requirement to change the identity to a pool identity.

5. The apparatus (300) according to claim 2, wherein the at least one user privacy rule comprises a rule comprising a location as the user data category and wherein the privacy requirement is a requirement to reduce an accuracy of the location.

6. The apparatus (300) of any preceding claim, wherein the means comprises
at least one processor (310); and at least one memory (320) including computer program code, the at least one memory (320) and computer program code being configured to, with the at least one processor (310), control the apparatus (300).

7. An apparatus (300) comprising means for performing:
- functioning as a network repository function (140) in a service based architecture communication network;
**characterized in that** the means are further configured to perform:
- receiving a heartbeat message from a network function producer (122); and
- responding to the heartbeat message with a heartbeat response to the network function producer (122), the heartbeat response comprising at least one user privacy rule relating to at least one user.

8. The apparatus (300) of claim 7, wherein the means comprises
at least one processor (310); and at least one memory (320) including computer program code, the at least one memory (320) and computer program code being configured to, with the at least one processor (310), control the apparatus (300).

9. A method, comprising:
- processing (510), by an apparatus acting as a network function producer, a request for data of at least one user of a communication system, the request received directly or indirectly from a network function consumer in a service based architecture communication network;
- obtaining (520) at least one user privacy rule relating to the at least one user; and
- determining (530) how to respond to the request based at least in part on the on an intended use of the data and at least one user privacy rule relating to the at least one user;
**characterized in that**
- the obtaining (520) comprises obtaining the at least one user privacy rule in a heartbeat response message from a network repository function and **in that** the request comprises an indication of an intended use of the data.

10. A method, comprising:
- functioning, by an apparatus (300), as a network repository function (140) in a service based architecture communication network;
**characterized by**:
- receiving a heartbeat message from a network function producer (122), and
- responding to the heartbeat message with a heartbeat response to the network function producer (122), the heartbeat response comprising at least one user privacy rule relating to at least one user.

11. A computer program comprising instructions for performing at least the steps of claim 9.

12. A computer program comprising instructions for performing at least the steps of claim 10.

## Patentansprüche

1. Vorrichtung (300), die als ein Netzwerkfunktionsproduzent fungiert, der Mittel zum Durchführen von Folgendem umfasst:
- Verarbeiten (510) einer Anforderung von Daten von mindestens einem Benutzer eines Kommunikationssystems, wobei die Anforderung direkt oder indirekt von einem Netzwerkfunktionsverbraucher in einem Kommunikationsnetzwerk mit dienstbasierter Architektur empfangen wird;
- Erhalten (520) von mindestens einer Benutzerdatenschutzregel, die sich auf den mindestens einen Benutzer bezieht; und
- Bestimmen (530) mindestens teilweise auf Basis einer beabsichtigten Verwendung der Daten und der mindestens einen Benutzerdatenschutzregel, die sich auf den mindestens einen Benutzer bezieht, wie auf die Anforderung zu antworten ist;
**dadurch gekennzeichnet, dass**
- das Erhalten (520) das Erhalten der mindestens einen Benutzerdatenschutzregel in einer Heartbeat-Antwortnachricht von einer Netzwerkrepositoriumsfunktion umfasst und dass die Anforderung eine Anzeige einer beabsichtigten Verwendung der Daten umfasst.

2. Vorrichtung (300) nach Anspruch 1, wobei jede der mindestens einen Benutzerdatenschutzregel eine Benutzerdatenkategorie und eine Datenschutzanforderung für die Benutzerdatenkategorie umfasst.

3. Vorrichtung (300) nach Anspruch 2, wobei die mindestens eine Benutzerdatenschutzregel eine Regel umfasst, die eine Identität als die Benutzerdatenkategorie umfasst, und wobei die Datenschutzanforderung eine Anforderung zum Ändern der Identität in eine willkürliche Identität ist.

4. Vorrichtung (300) nach Anspruch 2, wobei die mindestens eine Benutzerdatenschutzregel eine Regel umfasst, die eine Identität als die Benutzerdatenkategorie umfasst, und wobei die Datenschutzanforderung eine Anforderung zum Ändern der Identität in eine Poolidentität ist.

5. Vorrichtung (300) nach Anspruch 2, wobei die mindestens eine Benutzerdatenschutzregel eine Regel umfasst, die einen Standort als die Benutzerdatenkategorie umfasst, und wobei die Datenschutzanforderung eine Anforderung zum Reduzieren einer Genauigkeit des Standorts ist.

6. Vorrichtung (300) nach einem der vorhergehenden Ansprüche, wobei die Mittel Folgendes umfassen
mindestens einen Prozessor (310); und mindestens einen Speicher (320), der einen Computerprogrammcode beinhaltet, wobei der mindestens eine Speicher (320) und der Computerprogrammcode dazu ausgelegt sind, die Vorrichtung (300) mit dem mindestens einen Prozessor (310) zu steuern.

7. Vorrichtung (300), die Mittel zum Durchführen von Folgendem umfasst:
- Fungieren als eine Netzwerkrepositoriumsfunktion (140) in einem Kommunikationsnetzwerk mit dienstbasierter Architektur;
**dadurch gekennzeichnet, dass** die Mittel ferner dazu ausgelegt sind, Folgendes durchzuführen:
- Empfangen einer Heartbeat-Nachricht von einem Netzwerkfunktionsproduzenten (122); und
- Antworten auf die Heartbeat-Nachricht mit einer Heartbeat-Antwort an den Netzwerkfunktionsproduzenten (122), wobei die Heartbeat-Antwort mindestens eine Benutzerdatenschutzregel umfasst, die sich auf mindestens einen Benutzer bezieht.

8. Vorrichtung (300) nach Anspruch 7, wobei die Mittel Folgendes umfassen
mindestens einen Prozessor (310); und mindestens einen Speicher (320), der einen Computerprogrammcode beinhaltet, wobei der mindestens eine Speicher (320) und der Computerprogrammcode dazu ausgelegt sind, die Vorrichtung (300) mit dem mindestens einen Prozessor (310) zu steuern.

9. Verfahren, das Folgendes umfasst:
- Verarbeiten (510) einer Anforderung von Daten von mindestens einem Benutzer eines Kommunikationssystems durch eine Vorrichtung, die als ein Netzwerkfunktionsproduzent fungiert, wobei die Anforderung direkt oder indirekt von einem Netzwerkfunktionsverbraucher in einem Kommunikationsnetzwerk mit dienstbasierter Architektur empfangen wird;
- Erhalten (520) von mindestens einer Benutzerdatenschutzregel, die sich auf den mindestens einen Benutzer bezieht; und
- Bestimmen (530) mindestens teilweise auf Basis der beabsichtigten Verwendung der Daten und mindestens einer Benutzerdatenschutzregel, die sich auf den mindestens einen Benutzer bezieht, wie auf die Anforderung zu antworten ist;
**dadurch gekennzeichnet, dass**
- das Erhalten (520) das Erhalten der mindestens einen Benutzerdatenschutzregel in einer Heartbeat-Antwortnachricht von einer Netzwerkrepositoriumsfunktion umfasst und dass die Anforderung eine Anzeige einer beabsichtigten Verwendung der Daten umfasst.

10. Verfahren, das Folgendes umfasst:
- Fungieren als eine Netzwerkrepositoriumsfunktion (140) in einem Kommunikationsnetzwerk mit dienstbasierter Architektur durch eine Vorrichtung (300);
**gekennzeichnet durch**:
- Empfangen einer Heartbeat-Nachricht von einem Netzwerkfunktionsproduzenten (122), und
- Antworten auf die Heartbeat-Nachricht mit einer Heartbeat-Antwort an den Netzwerkfunktionsproduzenten (122), wobei die Heartbeat-Antwort mindestens eine Benutzerdatenschutzregel umfasst, die sich auf mindestens einen Benutzer bezieht.

11. Computerprogramm, das Anweisungen zum Durchführen mindestens der Schritte von Anspruch 9 umfasst.

12. Computerprogramm, das Anweisungen zum Durchführen mindestens der Schritte von Anspruch 10 umfasst.

## Revendications

1. Appareil (300) qui agit en tant que producteur de fonction de réseau comprenant des moyens pour effectuer les étapes suivantes :
- traiter (510) une demande de données d'au moins un utilisateur d'un système de communication, la demande étant reçue directement ou indirectement d'un consommateur de fonction de réseau dans un réseau de communication à architecture basée sur les services ;
- obtenir (520) au moins une règle de confidentialité d'utilisateur relative à l'au moins un utilisateur ; et
- déterminer (530) comment répondre à la demande en se basant au moins en partie sur une utilisation prévue des données et la au moins une règle de confidentialité d'utilisateur relative à l'au moins un utilisateur ;
**caractérisé en ce que**
- l'obtention (520) comprend l'obtention de la au moins une règle de confidentialité d'utilisateur dans un message de réponse de battement de coeur provenant d'une fonction de référentiel de réseau, et **en ce que** la demande comprend une indication d'une utilisation prévue des données.

2. Appareil (300) selon la revendication 1, dans lequel chacune des au moins une règle de confidentialité d'utilisateur comprend une catégorie de données d'utilisateur et une exigence de confidentialité pour la catégorie de données d'utilisateur.

3. Appareil (300) selon la revendication 2, dans lequel la au moins une règle de confidentialité d'utilisateur comprend une règle comprenant une identité en tant que catégorie de données d'utilisateur, et dans lequel l'exigence de confidentialité est une exigence de changement de l'identité en une identité aléatoire.

4. Appareil (300) selon la revendication 2, dans lequel la au moins une règle de confidentialité d'utilisateur comprend une règle comprenant une identité en tant que catégorie de données d'utilisateur, et dans lequel l'exigence de confidentialité est une exigence de changement de l'identité en une identité de groupe.

5. Appareil (300) selon la revendication 2, dans lequel la au moins une règle de confidentialité d'utilisateur comprend une règle comprenant un emplacement en tant que catégorie de données d'utilisateur, et dans lequel l'exigence de confidentialité est une exigence de réduction de la précision de l'emplacement.

6. Appareil (300) selon l'une des revendications précédentes, dans lequel les moyens comprennent au moins un processeur (310) ; et au moins une mémoire (320) comportant un code de programme informatique, la au moins une mémoire (320) et le code de programme informatique étant configurés pour, avec le au moins un processeur (310), commander l'appareil (300).

7. Appareil (300) comprenant des moyens pour effectuer :
- le fonctionnement en tant que fonction de référentiel de réseau (140) dans un réseau de communication à architecture basée sur les services ;
**caractérisé en ce que** les moyens sont en outre configurés pour effectuer les étapes suivantes :
- recevoir un message de battement de coeur d'un producteur de fonction de réseau (122) ; et
- répondre au message de battement de coeur avec une réponse de battement de coeur au producteur de fonction de réseau (122), la réponse de battement de coeur comprenant au moins une règle de confidentialité d'utilisateur relative à au moins un utilisateur.

8. Appareil (300) selon la revendication 7, dans lequel les moyens comprennent au moins un processeur (310) ; et au moins une mémoire (320) comportant un code de programme informatique, la au moins une mémoire (320) et le code de programme informatique étant configurés pour, avec le au moins un processeur (310), commander l'appareil (300).

9. Procédé, comprenant les étapes suivantes :
- traiter (510), par un appareil agissant en tant que producteur de fonction de réseau, une demande de données d'au moins un utilisateur d'un système de communication, la demande étant reçue directement ou indirectement d'un consommateur de fonction de réseau dans un réseau de communication à architecture basée sur les services ;
- obtenir (520) au moins une règle de confidentialité d'utilisateur relative à l'au moins un utilisateur ; et
- déterminer (530) comment répondre à la demande en se basant au moins en partie sur l'utilisation prévue des données et au moins une règle de confidentialité d'utilisateur relative à l'au moins un utilisateur ;
**caractérisé en ce que**
- l'obtention (520) comprend l'obtention de la au moins une règle de confidentialité d'utilisateur dans un message de réponse de battement de coeur d'une fonction de référentiel de réseau, et **en ce que** la demande comprend une indication d'une utilisation prévue des données.

10. Procédé, comprenant
- un appareil (300) fonctionnant en tant que fonction de référentiel de réseau (140) dans un réseau de communication à architecture basée sur les services ;
**caractérisé par**
- la réception d'un message de battement de coeur d'un producteur de fonction de réseau (122), et
- la réponse au message de battement de coeur avec une réponse de battement de coeur au producteur de fonction de réseau (122), la réponse de battement de coeur comprenant au moins une règle de confidentialité d'utilisateur relative à au moins un utilisateur.

11. Programme informatique comprenant des instructions pour effectuer au moins les étapes de la revendication 9.

12. Programme informatique comprenant des instructions pour effectuer au moins les étapes de la revendication 10.
